# EUROPÄISCHE PATENTSCHRIFT

(11) **EP 2 559 911 B1**
(45) Veröffentlichungstag und Bekanntmachung des Hinweises auf die Patenterteilung: **13.03.2019**
(21) Anmeldenummer: 12179796.3
(22) Anmeldetag: 09.08.2012
(51) Int. Cl.: F16F 9/06, F16F 9/36, F16F 9/19

(54) **Dämpfer**
Amortisseur
Damper

(30) Priorität: 15.08.2011 DE 102011080962
(43) Veröffentlichungstag der Anmeldung: 20.02.2013
(73) Patentinhaber: SUSPA GmbH, 90518 Altdorf (DE)
(72) Erfinder: Böhrer, Andreas, 92318 Neumarkt (DE); Löscher, Roland, 91058 Tennenlohe (DE); Krog, Andreas, 90610 Winkelhaid (DE)
(74) Vertreter: Rau, Schneck & Hübner Patentanwälte Rechtsanwälte PartGmbB

(56) Entgegenhaltungen:
- DE-A1- 2 111 713
- DE-A1- 2 257 556
- DE-U1- 29 506 891
- US-A- 2 107 974
- US-A- 4 651 986

## Beschreibung

Die Anmeldung betrifft einen Dämpfer zur Dämpfung einer Bewegung entlang einer Mittel-Längs-Achse, insbesondere zur Dämpfung eines Sitzes in einem Fahrzeug.

Derartige Dämpfer sind durch offenkundige Vorbenutzung bekannt und werden beispielsweise zur Dämpfung von Fahrersitzen von Lastkraftwagen oder Traktoren verwendet. Es ist grundsätzlich auch denkbar, derartige Dämpfer als Fahrwerksdämpfer einzusetzen. Zudem ist es möglich, Sportgeräte und insbesondere Rudermaschinen mit derartigen Dämpfern auszustatten. Derartige Dämpfer werden auch als Zweirohr-Dämpfer bezeichnet. Beispielhafte Dämpfer sind aus den Druckschriften US 4,651,986 A, US 2,107,974 A, DE 2 111 713 A1, DE 2 257 556 A1 und DE 295 06 891 U1 bekannt. Derartige Dämpfer können ein in Abhängigkeit einer Betätigungsrichtung des Dämpfers unterschiedliches Dämpfungsverhalten aufweisen. Beispielsweise kann eine geringe Dämpfungswirkung erwünscht sein, wenn der Dämpfer in Einschubrichtung betätigt wird, d. h. ein Fahrersitz belastet wird. Dagegen kann eine hohe Dämpfungswirkung in einer der Einschubrichtung entgegengesetzten Auszugsrichtung erwünscht sein, d. h. wenn der Fahrersitz wieder entlastet wird. Bei Zweirohr-Dämpfern wird beim Einschieben einer Kolbenstange Druckfluid wie beispielsweise Öl aus einem inneren Arbeitsraum verdrängt und strömt durch eine Kolbenstangen-Führung möglichst druckverlustfrei in einen äußeren Ausgleichsraum. Beim Ausziehen der Kolbenstange wird dem Ölstrom in der Kolbenstangen-Führung ein Widerstand entgegengesetzt, um die erhöhte Dämpfungswirkung zu erreichen. Durch offenkundige Vorbenutzung ist ein in der Kolbenstangen-Führung angeordnetes Ventil bekannt, das beim Einschieben der Kolbenstange öffnet und den Ölstrom durch die Kolbenstangen-Führung widerstandsfrei ermöglicht. Beim Ausziehen ist die Kolbenstangen-Führung durch das Ventil hermetisch verschlossen. Bei einer Fehlfunktion des Ventils kann der Ölstrom beim Einschieben der Kolbenstange verhindert werden, so dass eine unerwartet hohe Dämpfungswirkung auftritt. Dies wird beispielsweise als Blockieren des Dämpfers wahrgenommen. Durch offenkundige Vorbenutzung ist auch bekannt, einen zwischen der Kolbenstange und der Kolbenstangen-Führung vorhandenen Ringspalt als Strömungspassage für das Druckfluid zu verwenden. Die Größe des Ringspalts und damit die Dämpfungswirkung des Dämpfers insgesamt sind direkt von den Fertigungstoleranzen der Kolbenstange und der Kolbenstangen-Führung abhängig. Bereits geringe Streuungen der Maße können die Dämpfungswirkung signifikant verändern.

Es ist eine Aufgabe der vorliegenden Erfindung, einen Dämpfer mit einem verbesserten Dämpfungsverhalten bereitzustellen, der insbesondere fehlerfrei funktioniert und unaufwendig herstellbar ist.

Diese Aufgabe wird durch einen Dämpfer mit den im Anspruch 1 angegebenen Merkmalen in nicht naheliegender Weise gelöst. Der Kern der Erfindung besteht darin, dass das Dämpfungsfluid, das bei einer Betätigung des Dämpfers von einem Arbeitsraum in einen Ausgleichsraum verdrängt wird, einen Drosselkanal passiert, der eine Fluiddrosselverbindung darstellt. Das Dämpfungsfluid strömt durch den Drosselkanal insbesondere sowohl bei einer Betätigung in einer Einschubrichtung als auch in einer Auszugrichtung von dem Arbeitsraum in den Ausgleichsraum. Der Drosselkanal ist in eine Führungs- und Dichtungseinheit des Dämpfers integriert, die ein Außen-Gehäuse an einem ersten Gehäuse-Ende abschließt. Durch die Führungs- und Dichtungseinheit ist eine Kolbenstange an dem ersten Gehäuse-Ende aus dem Dämpfer abgedichtet herausgeführt. In dem Außen-Gehäuse ist ein den Arbeitsraum umgebendes Innen-Gehäuse angeordnet. Das Innen-Gehäuse weist eine Mittel-Längs-Achse auf. Der Arbeitsraum ist durch einen an der Kolbenstange befestigten Kolben in einen dem ersten Gehäuse-Ende zugewandten ersten Teil-Arbeitsraum und einen dem zweiten Gehäuse-Ende zugewandten zweiten Teil-Arbeitsraum unterteilt. Der Kolben weist mindestens einen Durchström-Kanal zum Verbinden der Teil-Arbeitsräume auf. Zwischen dem Innen-Gehäuse und dem Außen-Gehäuse ist der Ausgleichsraum angeordnet. Der Drosselkanal weist eine senkrecht zu einer Fluidströmungsrichtung orientierte Querschnittsfläche mit einer lichten Weite und einer Länge auf und ermöglicht eine gedrosselte Fluidverbindung zwischen dem Arbeitsraum und dem Ausgleichsraum. Eine Drosselwirkung bzw. eine Dämpfungswirkung des Dämpfers kann insbesondere durch eine Variation der Länge des Drosselkanals erfolgen. Insbesondere hat die Fertigungsgenauigkeit für die Herstellung des Drosselkanals keinen signifikanten Einfluss auf die Dämpfungswirkung. Es ist nicht erforderlich, einen zwischen der Kolbenstange und der Führungs- und Dichtungseinheit angeordneten Ringspalt als Drosselkanal zu verwenden. Der vorliegende Dämpfer ermöglicht eine Beeinflussung der Dämpfkraft in Abhängigkeit einer Betätigungsrichtung, d. h. einer Auszugsrichtung der Kolbenstange aus dem Dämpfer oder einer der Auszugsrichtung entgegen gerichteten Einschubrichtung in den Dämpfer, wobei in Einschubrichtung eine geringe und in Auszugrichtung eine hohe Dämpfungswirkung vorliegt. Der Drosselkanal ist unkompliziert und unaufwändig herstellbar. Der Drosselkanal ist robust in der Anwendung, wobei insbesondere ein Blockieren des Dämpfers durch ein Verschließen des Drosselkanals während der Anwendung vermieden wird. Eine Fehlfunktion des Dämpfers ist ausgeschlossen.

Der Drosselkanal ist zumindest abschnittsweise quer zur Mittel-Längs-Achse orientiert und schraubenlinienförmig um die Mittel-Längs-Achse ausgeführt. Der Drosselkanal hat einen Öffnungswinkel von größer 360°. Ein derartiger Drosselkanal kann direkt in die Führungs- und Dämpfungseinheit integriert werden. Es ist möglich, einen Drosselkanal mit großer Länge bei vergleichsweise geringer Baugröße der Führungs- und Dämpfungseinheit zu realisieren. Der Dämpfer ist kompakt ausgeführt. Ein derartiger Dämpfer weist ein hohes Verhältnis von Dämpfungswirkung zu Baugröße auf. Ein derartiger Dämpfer ist robust.

Ein Dämpfer nach Anspruch 2 ermöglicht eine besonders effektive Dämpfung des Dämpfungsfluids. Das Dämpfungsfluid wird entlang des Drosselkanals aufgrund einer reduzierten lichten Weite des Drosselkanals und einer erhöhten Länge des Drosselkanals gedrosselt. Je größer die Länge des Drosselkanals ist, desto größer ist die Dämpfungswirkung des Dämpfungsfluids entlang des Drosselkanals. Die lichte Weite des Drosselkanals ist kleiner als dessen Länge, wobei das Verhältnis von lichter Weite zu Länge weniger beträgt als 0,1, insbesondere weniger als 0,05, insbesondere weniger als 0,01 und insbesondere weniger als 0,005. Insbesondere weist die Querschnittsfläche des Drosselkanals eine Kreisform, eine Halbkreisform, eine Rechteckform oder eine andere beliebige geometrische Form auf.

Ein Dämpfer nach Anspruch 3 kann für den erforderlichen Einsatzzweck entsprechend angepasst und insbesondere individualisiert werden. Es ist beispielsweise möglich, dass die Dämpfungswirkung bei einem Fahrersitz in einem Lastkraftwagen sich von der eines Fahrersitzes in einem Traktor unterscheiden soll. Es ist nicht erforderlich, verschiedene Dämpfer zur Verfügung zu stellen, sondern die Dämpfungswirkung des Dämpfers durch Veränderung der Länge des Drosselkanals zu verändern. Dies kann insbesondere durch Variation von Einzelbauteilen der Führungs- und Dichtungseinheit erfolgen.

Bei einem Dämpfer nach Anspruch 4 kann die Führungs- und DichtungsEinheit unkompliziert und unaufwändig gefertigt und montiert werden.

Bei einem Dämpfer nach Anspruch 5 ist der Drosselkanal robust ausgeführt. Aufgrund der Integration in das Führungs-Gehäuse und/oder den Führungs-Deckel ist es nicht erforderlich, den Drosselkanal mittels eines separaten, zusätzlichen Bauteils zu realisieren. Die Teileanzahl des Dämpfers ist insgesamt reduziert.

Ein Dämpfer nach den Ansprüchen 6 oder 7 ermöglicht einen integrierten, robusten Drosselkanal mit einer zuverlässigen Drosselwirkung.

Ein Dämpfer nach Anspruch 8 weist einen einfachen und unkomplizierten Aufbau auf. Insbesondere ist ein Führungs-Deckel nicht erforderlich.

Bei einem Dämpfer nach Anspruch 9 dient ein Abdeck-Element zwischen dem Führungs-Gehäuse der Führungs- und Dichtungseinheit und dem Innen-Gehäuse einerseits als Dicht-Element und andererseits als EinstellElement für die Länge des Drosselkanals und damit für die Dämpfungswirkung des Dämpfers.

Ein Dämpfer nach Anspruch 10 ermöglicht die Intensivierung der Richtungsabhängigkeit der Dämpfungswirkung.

Bei einem Dämpfer nach Anspruch 11 wird verhindert, dass das Dämpfungsfluid, das durch einen zwischen der Führungs- und Dichtungseinheit und der Kolbenstange gebildeten Ringspalt in eine Druckkammer entwichenes Dämpfungsfluid bei einer Betätigung des Dämpfers dessen Funktionsweise beeinträchtigt. Ein Ventilring verhindert, dass das Dämpfungsfluid, insbesondere bei Betätigung der Kolbenstange in der Auszugrichtung, aus dem Arbeitsraum in die Druckkammer gelangt. Insbesondere kann ein Fluidstrom durch den Ringspalt toleriert werden. Es ist insbesondere nicht erforderlich, höchste Dichtheitsanforderungen an die Kolbenstangenführung zu stellen.

Ein Dämpfer nach Anspruch 12 ermöglicht einen kontrollierten Druckabbau der Druckkammer mittels einer Entlüftungs-Öffnung. Dadurch wird gewährleistet, dass das in die Druckkammer gelangte Dämpfungsfluid das Dichtungs-Element der Führungs- und Dichtungseinheit nicht beschädigt.

Ein Dämpfer nach Anspruch 13 ermöglicht eine Druckentlastung der Druckkammer und damit des Dichtungs-Elements, ohne dass die Funktionalität des Drosselkanals und damit des Dämpfers insgesamt, beeinträchtigt wird. Auch eine eventuelle Fehlfunktion des Ventilringes, d. h. ein Verschließen des Ringspaltes, insbesondere bei einer Betätigung der Kolbenstange in der Einschubrichtung, führt nicht zu einer Beeinträchtigung der Dämpfungswirkung des Dämpfers. Ein gedrosselter Abfluss des Dämpfungsfluids über den Drosselkanal ist gewährleistet. Eine Beeinträchtigung einer möglichen Sitzdämpfung ist für einen Fahrer nicht spürbar. Auch eine eventuelle Fehlfunktion des Ventilringes derart, dass der Ringspalt, insbesondere bei einer Betätigung der Kolbenstange in der Auszugrichtung, nicht verschließt, führt nicht zu einer Beeinträchtigung der Dämpfungswirkung des Dämpfers. Der Einfluss einer Entlüftungsöffnung der Druckkammer ist gegenüber der Drosselstrecke untergeordnet, d.h. die Dämpfungswirkung des Dämpfers wird ausschließlich durch die Drosselstrecke bereitgestellt. Es ist zusätzlich möglich, mittels des Ventilringes weitere Strömungsquerschnitte zu aktivieren, d. h. dass diese zusätzlichen Strömungsquerschnitte mittels des Ventils freigelegt werden, um einen Fluidabfluss über den Drosselkanal und somit die Dämpfungswirkung des Dämpfers insgesamt zu reduzieren.

Bei einem Dämpfer nach Anspruch 14 kann Dämpfungsfluid von dem Ausgleichsraum über ein Boden-Ventil direkt in den Arbeitsraum, d. h. in einen zweiten Teil-Arbeitsraum strömen. Dadurch ist die Dämpfungswirkung zusätzlich von der Betätigungsrichtung entkoppelt. Es ist beispielsweise möglich, mindestens einen Durchström-Kanal des Kolbens als zylindrische Bohrung auszuführen, da eine Richtungsabhängigkeit der Fluidströmung durch das insbesondere nur in Auszugsrichtung der Kolbenstange aktivierte Boden-Ventil gewährleistet ist.

Zusätzliche Merkmale und Einzelheiten der Erfindung ergeben sich aus der Beschreibung von vier Ausführungsbeispielen anhand der Zeichnungen. Es zeigen:
- Fig. 1: einen Längsschnitt eines erfindungsgemäßen Dämpfers gemäß einem ersten Ausführungsbeispiel mit im Wesentlichen vollständig ausgezogener Kolbenstange,
- Fig. 2: eine Fig. 1 entsprechende Darstellung mit nahezu vollständig eingeschobener Kolbenstange,
- Fig. 3: eine vergrößerte Detailansicht einer Führungs- und Dichtungseinheit des Dämpfers in Fig. 1,
- Fig. 4: eine halbgeschnittene, perspektivische Darstellung der Führungs- und Dichtungseinheit gemäß Fig. 3,
- Fig. 5: eine Fig. 3 entsprechende Darstellung einer Führungs- und Dichtungseinheit gemäß einem zweiten Ausführungsbeispiel,
- Fig. 6: eine Fig. 4 entsprechende halbgeschnittene, perspektivische Darstellung einer Führungs- und Dichtungseinheit gemäß dem zweiten Ausführungsbeispiel,
- Fig. 7: eine Fig. 3 entsprechende Darstellung einer Führungs- und Dichtungseinheit gemäß einem dritten Ausführungsbeispiel,
- Fig. 8: eine Fig. 4 entsprechende halbgeschnittene, perspektivische Darstellung einer Führungs- und Dichtungseinheit gemäß dem dritten Ausführungsbeispiel,
- Fig. 9: eine Fig. 3 entsprechende Darstellung einer Führungs- und Dichtungseinheit gemäß einem vierten Ausführungsbeispiel und
- Fig. 10: eine perspektivische Darstellung von vorne eines Führungs-Deckels der Führungs- und Dichtungseinheit gemäß Fig. 9.

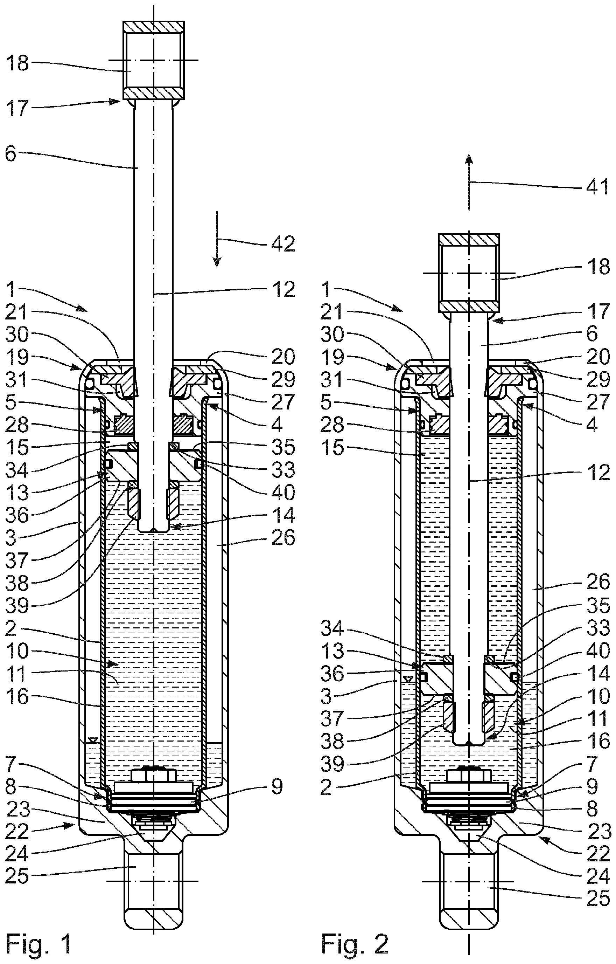

Im Folgenden wird unter Bezugnahme auf die Figuren 1 bis 4 ein erstes Ausführungsbeispiel der Erfindung beschrieben. Ein als Ganzes mit 1 bezeichneter Dämpfer ist in Form eines Hydraulikdämpfers ausgebildet und weist ein im Wesentlichen hohlzylinderförmiges Innen-Gehäuse 2 und ein das Innen-Gehäuse 2 umgebendes Außen-Gehäuse 3 auf. Die beiden Gehäuse 2, 3 sind gemäß dem gezeigten Ausführungsbeispiel als RohrAbschnitte ausgeführt. Der Dämpfer 1 wird als Zwei-Rohr-Dämpfer bezeichnet.

Das Innen-Gehäuse 2 ist an einem, in Fig. 1 links dargestellten, ersten Gehäuse-Ende 4 durch eine Führungs- und Dichtungseinheit 5 zur Führung und Abdichtung einer aus dem ersten Gehäuse-Ende 4 herausgeführten Kolbenstange 6 verschlossen. An einem dem ersten Gehäuse-Ende 4 gegenüber liegenden zweiten Gehäuse-Ende 7 ist das Innen-Gehäuse 2 durch einen ringförmigen Gehäuse-Deckel 8 mit einem Boden-Ventil 9 verschlossen. Das Innen-Gehäuse 2, die Führungs- und Dichtungseinheit 5 und der Gehäuse-Deckel 8 umschließen im Wesentlichen einen Arbeitsraum 10, der mit einem Dämpfungsfluid 11 gefüllt ist. In dem Innen-Gehäuse 2 ist konzentrisch zu einer Mittel-Längs-Achse 12 ein entlang dieser verschiebbar geführten Kolben 13 angeordnet, der an einem ersten Kolbenstangen-Ende 14 befestigt ist. Der Kolben 13 unterteilt den Arbeitsraum 10 in einen dem ersten Gehäuse-Ende 4 zugewandten ersten Teil-Arbeitsraum 15 und einen dem zweiten Gehäuse-Ende 7 zugewandten zweiten Teil-Arbeitsraum 16. An einem außerhalb des Dämpfers 1 angeordneten zweiten Kolbenstangen-Ende 17 ist ein erstes Befestigungs-Element 18 in Form einer zylindrischen Durchgangsöffnung angeformt.

Das Außen-Gehäuse 3 weist einen runden Querschnitt auf und umgibt das Innen-Gehäuse 2. Ein erstes Gehäuse-Ende 19 ist zur Ausbildung eines Gehäuse-Anschlags 20 umgebördelt, wobei eine Gehäuse-Öffnung 21 begrenzt wird, durch die die Kolbenstange 6 geführt ist. Ein dem ersten Gehäuse-Ende 19 gegenüber liegendes zweites Gehäuse-Ende 22 des Außen-Gehäuses 3 ist durch einen einteilig mit dem Außen-Gehäuse 3 ausgebildeten Gehäuse-Boden 23 verschlossen. Der Gehäuse-Boden 23 kann auch als separate und insbesondere mehrteilig ausgeführte Komponente mit dem Außen-Gehäuse 3 verbunden sein. Der Gehäuse-Boden 23 ist auf der dem Innen-Gehäuse 2 zugewandten Seite zur Aufnahme des Boden-Ventils 9 mit einer zum Beispiel stufenförmigen Gehäuse-Boden-Vertiefung 24 versehen. An einer dem Innen-Gehäuse 2 abgewandten Seite des GehäuseBodens 23 ist ein zweites Befestigungs-Element 25 ausgebildet oder befestigt, wobei das zweite Befestigungs-Element 25 im Wesentlichen mittig zu der Mittel-Längs-Achse 12 ausgerichtet ist. Das Innen-Gehäuse 2 und das Außen-Gehäuse 3 sind konzentrisch zur Mittel-Längs-Achse 12 angeordnet, so dass ein Ausgleichsraum 26 in Form eines Ringspaltes gebildet wird. Der Ausgleichsraum 26 weist entlang seines Umfangs eine konstante Breite auf. Es ist auch möglich, dass der Dämpfer 1 mindestens ein Gehäuse 3 mit einem unrunden, im Wesentlichen ovalen Querschnitt umfasst, das zu dem anderen Gehäuse 2 derart versetzt angeordnet ist, dass der Ausgleichsraum 26 in Form eines Ringspaltes mit einem ovalen Querschnitt gebildet wird. Der Ausgleichsraum 26 kann sich zusätzlich in die Gehäuse-Boden-Vertiefung 24 erstrecken. Der Ausgleichsraum 26 kann unter Druck stehen und ist teilweise mit dem Dämpfungsfluid 11, beispielsweise Öl, Gas wie beispielsweise Stickstoff gefüllt.

Zur Befestigung des Innen-Gehäuses 2 in dem Außen-Gehäuse 3 im Bereich der ersten Gehäuse-Enden 4, 19 weist die Führungs- und Dichtungseinheit 5 ein Führungs-Gehäuse 27 und einen Führungs-Deckel 28 auf. Der Führungs-Deckel 28 ist in einer dafür vorgesehenen Ausnehmung des Führungs-Gehäuses 27 angeordnet. Das Führungs-Gehäuse 27 ist entlang der Mittel-Längs-Achse 12 stufenförmig ausgeführt und ist mit einer Innen-Gehäuse-Stufe in dem Innen-Gehäuse 2 abgedichtet angeordnet. Mit einer Außen-Gehäuse-Stufe ist das Führungs-Gehäuse 27 umfangsseitig am Außen-Gehäuse 3 abgedichtet und entlang der Mittel-Längs-Achse 12 über eine Scheibe 29 am Gehäuse-Anschlag 20 abgestützt. An einer dem ersten Gehäuse-Ende 19 des Außen-Gehäuses 3 zugewandten Stirnfläche weist das Führungs-Gehäuse 27 eine Ausnehmung auf, in die ein Dichtungs-Element 30 eingesetzt ist. Das Dichtungs-Element 30 dient dem abgedichteten Herausführen der Kolbenstange 6 aus dem Dämpfer 1. Die Ausnehmung in dem Führungs-Gehäuse 27 ist größer gewählt als das darin angeordnete Dichtungs-Element 30, sodass von der Führungs- und Dichtungseinheit 5, dem Dichtungs-Element 30 und der Kolbenstange 6 eine Druckkammer 31 begrenzt wird.

Es ist zusätzlich möglich, zwischen dem Führungs-Gehäuse 27 und dem Führungs-Deckel 28 einen nicht dargestellten Ventilring vorzusehen. Der Ventilring verhindert eine Fluidströmung aus dem Arbeitsraum 10 in die Druckkammer 31, insbesondere bei einer Bewegung der Kolbenstange 6 in einer Auszug-Richtung 41. Bei einer Bewegung der Kolbenstange 6 in einer Einschub-Richtung 42 kann ein Fluidstrom von dem Arbeitsraum 10 in die Druckkammer 31 toleriert werden.

Das Führungs-Gehäuse 27 weist eine Schulter 32 auf, an der sich das Innen-Gehäuse 2 in axialer Richtung, d. h. entlang der Mittel-Längs-Achse 12 abstützt. Im Bereich der zweiten Gehäuse-Enden 7, 22 erfolgt die Befestigung des Innen-Gehäuses 2 an dem Außen-Gehäuse 3 durch den Gehäuse-Deckel 8, der ringförmig ausgebildet ist und mit einem in radialer Richtung über das Innen-Gehäuse 2 vorspringenden Gehäuse-Deckel-Anschlag gegen das zweite Gehäuse-Ende 7 anliegt. Zur Aufnahme des Boden-Ventils 9 weist der Gehäuse-Deckel 8 eine konzentrisch zur Mittel-Längs-Achse 12 angeordnete Gehäuse-Deckel-Bohrung auf, die in eine ringförmige Gehäuse-Deckel-Ausnehmung übergeht. Das Boden-Ventil 9 ermöglicht einen Fluidstrom von dem Ausgleichsraum 26 in den Arbeitsraum 10 und insbesondere in den zweiten Teil-Arbeitsraum 16.

Die Kolbenstange 6 weist an ihrem ersten Kolbenstangen-Ende 14 einen reduzierten Durchmesser auf, wodurch ein Kolbenstangen-Anschlag 33 ausgebildet ist. Auf dem ersten Kolbenstangen-Ende 14 sind ausgehend vom Kolbenstangen-Anschlag 33 eine erste Kolbenstangen-Distanzscheibe 34, ein erstes Verschluss-Element 35 in Form einer Tellerfeder, eine Kolben-Scheibe 36, ein zweites Verschluss-Element 37 in Form einer Tellerfeder, eine zweite Kolbenstangen-Distanzscheibe 38 und eine Kolbenstangen-Sicherungsmutter 39 angeordnet. Die Kolbenstangen-Sicherungsmutter 39 ist auf ein Kolbenstangen-Gewinde aufgeschraubt und sichert den Kolben 13 auf der Kolbenstange 6. Der Kolben 13 wird durch das erste Verschluss-Element 35, die Kolben-Scheibe 36, das zweite Verschluss-Element 37 und eine Kolben-Dichtung 40 gebildet. Die Kolben-Dichtung 40 ist ringförmig ausgebildet und in einer dafür vorgesehenen Kolben-Nut in der Kolben-Scheibe 36 angeordnet. Die Kolben-Nut ist in einer dem Innen-Gehäuse 2 zugewandten Außenwand der Kolben-Scheibe 36 ausgebildet. Die Kolben-Dichtung 40 dichtet die Kolben-Scheibe 36 gegen das Innen-Gehäuse 2 ab.

Das erste Verschluss-Element 35 ist bei einer Bewegung der Kolbenstange 6 in der Einschub-Richtung 42 wirksam und wird im Folgenden als Druck-Tellerfeder bezeichnet. Das zweite Verschluss-Element 37 ist in der Auszug-Richtung 41 wirksam und wird im Folgenden als Zug-Tellerfeder bezeichnet. Die Zug-Tellerfeder 37 wirkt mit mehreren, nicht dargestellten Zug-Durchströmkanälen und die Druck-Tellerfeder 35 mit mehreren, nicht dargestellten Druck-Durchströmkanälen zusammen. Die Durchströmkanäle weisen jeweils einen quer zu der Mittel-Längs-Achse 12 verlaufenden Quer-Kanal und einen mit dem Quer-Kanal verbundenen und entlang der Mittel-Längs-Achse 12 verlaufenden Längs-Kanal auf. Die Durchströmkanäle sind in der Kolben-Scheibe 36 ausgebildet und stellen eine Verbindung zwischen dem ersten Teil-Arbeitsraum 15 und dem zweiten Teil-Arbeitsraum 16 her. Die Druck-Durchströmkanäle können - in Einschub-Richtung 42 betrachtet - aus dem Längs-Kanal und dem sich daran anschließenden Quer-Kanal aufgebaut sein. Die Zug-Durchströmkanäle können dagegen durch den Quer-Kanal und den daran anschließenden Längs-Kanal aufgebaut sein. Die Längs-Kanäle der Zug-Durchströmkanäle können derart in der Kolben-Scheibe 36 angeordnet sein, dass sie durch die elastisch verformbare Zug-Tellerfeder 37 verschließbar sind. Entsprechend können die Längs-Kanäle der Druck-Durchströmkanäle derart in der Kolben-Scheibe 36 angeordnet sein, dass sie durch die elastisch verformbare Druck-Tellerfeder 35 verschließbar sind. Die Durchströmkanäle können bei einer Bewegung des Kolbens 13 in Auszug-Richtung 41 oder in Einschub-Richtung 42 jeweils eine wirksame Strömungs-Querschnittsfläche aufweisen, die durch ein Verschließen einzelner oder mehrerer Durchströmkanäle veränderbar ist. Unter der wirksamen Strömungs-Querschnittsfläche ist ein für die Dämpfungskraft-Geschwindigkeits-Kennlinie des Dämpfers 1 wirksamer Querschnitt der Durchströmkanäle zu verstehen, wobei der Querschnitt der Durchströmkanäle entlang von diesen beliebig sein kann. Die wirksame Strömungs-Querschnittsfläche ist somit als ein resultierender Querschnitt der Durchströmkanäle zu verstehen.

Der Dämpfer 1 weist eine bevorzugte Einbaulage derart auf, dass die Einschub-Richtung 42 mit der Richtung der Schwerkraft identisch ist. Der Dämpfer 1 wird derart an ein zu dämpfendes Element angebaut, das die Kolbenstange 6 mit dem ersten Befestigungs-Element 18 an dem zu dämpfenden Bewegungsteil beispielsweise des Fahrersitzes befestigt ist. Das bedeutet, dass der Dämpfer 1 im Wesentlichen mit seiner Mittel-Längs-Achse 12 vertikal ausgerichtet ist, wobei bei dieser Einbaulage die Kolbenstange 6 mit dem ersten Befestigungs-Element 18 oben angeordnet ist.

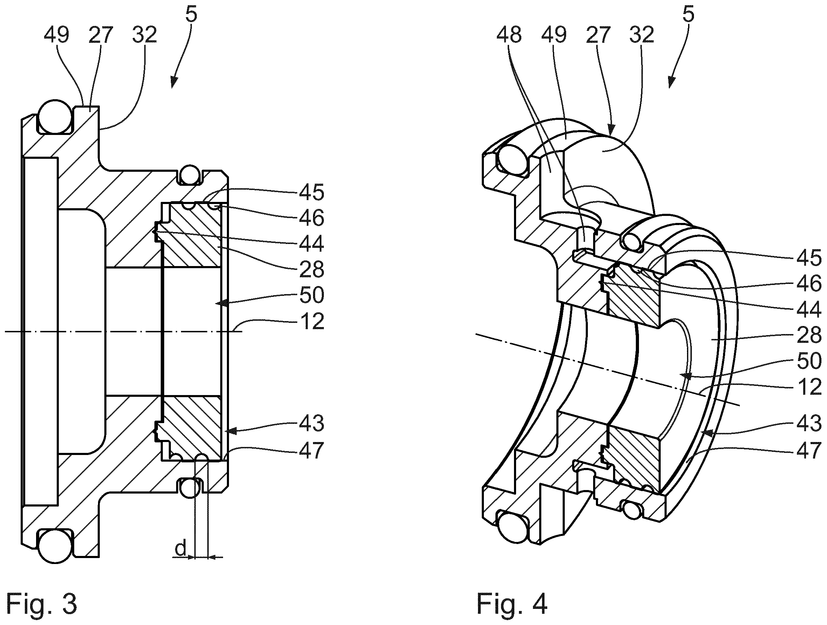

Die Führungs- und Dichtungseinheit 5 ist derart in den Gehäusen 2, 3 des Dämpfers 1 angeordnet, dass der Führungs-Deckel 28 dem Arbeitsraum 10 zugewandt ist. Der Führungs-Deckel 28 ist in einer dafür vorgesehenen Ausnehmung 43 des Führungs-Gehäuses 27 angeordnet. Der Führungs-Deckel 28 ist mit einer stirnseitigen, vorstehenden Ring-Erhebung 44 und einer dafür vorgesehenen Nut des Führungs-Gehäuses 27 angeordnet. Dadurch sind der Führungs-Deckel 28 und das Führungs-Gehäuse 27 relativ zueinander positioniert und insbesondere bezüglich der Mittel-Längs-Achse 12 konzentrisch angeordnet. An einer äußeren Zylinder-Mantelfläche 45 des Führungs-Deckels 28 ist eine Außen-Nut vorgesehen, die sich entlang der Mittel-Längs-Achse 12 als Schraubenlinie, also in Form einer Helix erstreckt. Entsprechend liegt der Führungs-Deckel 28 mit der äußeren Zylinder-Mantelfläche 45 lediglich abschnittsweise an einer inneren Zylinder-Mantelfläche 47 des Führungs-Gehäuses 27 an. Die Außen-Nut 46 ermöglicht einen Fluidstrom entlang einer Schraubenlinie an einem äußeren Umfang des Führungs-Deckels 28 zu einem Verteiler-Kanal 48. Der Verteiler-Kanal 48 ist im Wesentlichen stufenförmig in das Führungs-Gehäuse 27 integriert und verbindet die Außen-Nut 46 mit der Schulter 32, wobei der Verteiler-Kanal 48 bis zu einer äußeren MantelFläche 49 des Außen-Gehäuse-Abschnitts des Führungs-Gehäuses 27 reicht. Dadurch ist gewährleistet, dass das Dämpfungsfluid 11 von dem Arbeitsraum 10 entlang der Außen-Nut 46 über den Verteiler-Kanal 48 in die zwischen dem Innen-Gehäuse 2 und dem Außen-Gehäuse 3 angeordneten Ausgleichsraum 26 strömen kann. Dadurch, dass der Verteiler-Kanal 48 gegenüber der Schulter 32, an der das Innen-Gehäuse 2 angestützt ist, vertieft ist, ist der genannte Fluidstrom gewährleistet. Die Außen-Nut 46 wird auch als Drosselkanal bezeichnet und weist gemäß dem ersten Ausführungsbeispiel eine halbkreisförmige Strömungs-Querschnittsfläche mit einer lichten Weite d und einer Länge l auf. In dem genannten Ausführungsbeispiel ist die lichte Weite d der Durchmesser des Halbkreises. Gemäß dem in Fig. 3 und Fig. 4 gezeigten Ausführungsbeispiel ist der Drosselkanal 46 an der äußeren Zylinder-Mantelfläche 45 des Führungs-Deckels 28 als vollumfängliche Schraubenlinie am Umfang, d. h. mit einem Öffnungswinkel von 360°, ausgeführt. Das bedeutet, dass die Ganghöhe der Schraubenlinie der Breite des Führungs-Deckels 28 entspricht. Der schraubenlinienförmige Drosselkanal 46 kann auch einen von 360° verschiedenen Öffnungswinkel aufweisen. Es ist ein Öffnungswinkel von sowohl kleiner 360° als auch größer 360° möglich. Die Ganghöhe der Schraubenlinie kann von der Breite des Führungs-Deckels 28 verschieden sein. Es ist möglich durch Änderung der Breite des Führungs-Deckels 28, d. h. durch Veränderung der Dimension des Führungs-Deckels 28 entlang der Mittel-Längs-Achse 12 auch die Länge des Drosselkanals 46 anzupassen. Die Länge l des Drosselkanals 46 ist größer als die lichte Weite d des Drosselkanals. Es ist auch möglich andere Querschnittsformen für den Drosselkanal 46 auszuwählen wie beispielsweise eine Kreisform oder Rechteckform. Der Drosselkanal 46 kann auch mäanderförmig oder in einer anderen Anordnung um die Mittel-Längs-Achse 12 ausgeführt sein. Es ist möglich, in dem Drosselkanal 46 mindestens ein DrosselRückschlagventil vorzusehen, um ein Fluidstrom von dem Ausgleichsraum 26 in den Arbeitsraum 10 zu verhindern.

Im Folgenden wird die Funktion des Dämpfers 1 beschrieben. Der Kolben 13 weist Durchströmkanäle auf, die durch Tellerfedern 35, 37 verschließbar sind. Im Ruhe-Zustand des Dämpfers liegen die Tellerfedern 35, 37 am Kolben an, d.h. die Durchströmkanäle sind verschlossen. Bei Betätigung der Kolbenstange 6 steigt der Fluiddruck auf die Tellerfedern 35, 37 mit steigender Einschub- bzw. Auszieh-Geschwindigkeit an, insbesondere bis ein Schaltdruck in einem der Teil-Arbeitsräume 15, 16 erreicht ist. Bei Erreichen dieses Schaltdruckes hebt die entsprechende Tellerfeder 35, 37 vom Kolben ab. Die Fluidströmung zwischen den beiden Teil-Arbeitsräumen 15, 16 ist entlang der Durchströmkanäle des Kolbens 13 ungehindert möglich. Dies gilt bei einer Betätigung des Kolbens 13 sowohl in der Auszug-Richtung 41 als auch in der Einschub-Richtung 42. Ein derartiger Dämpfer 1 weist ein nicht-progressives Dämpfungsverhalten auf. Die Dämpfungskraft-Geschwindigkeits-Kennlinie ist durch die wirksame Strömungsquerschnittsfläche der Durchströmkanäle gegeben.

Es ist auch möglich, den Dämpfer 1 als sogenannten progressiven Dämpfer auszuführen, dessen Funktionsweise nachfolgend erläutert wird. Fig. 1 und 2 zeigen den Ruhe-Zustand des Dämpfers 1. Die Tellerfedern 35, 37 liegen nicht gegen die zugehörigen Anlageflächen an und die Durchströmkanäle sind nicht verschlossen. Bei einer Bewegung des Kolbens 13 in der Auszug-Richtung 41 oder in der Einschub-Richtung 42 mit niedriger Geschwindigkeit bleibt der Kolben 13, insbesondere die Tellerfedern 35, 37 im Wesentlichen in dem in Fig. 1, 2 dargestellten Ruhe-Zustand. Das Dämpfungsfluid 11 kann bei einer Bewegung des Kolbens 13 durch die Durchströmkanäle strömen. Die Tellerfedern 35, 37 lassen einen ausreichenden Spalt zwischen sich und den zugehörigen Anlageflächen, sodass das Dämpfungsfluid 11 in den jeweils anderen Teil-Arbeitsraum 15, 16 gelangen kann. Bei dem progressiven Dämpfer ist die Wirkungsweise der Tellerfedern 35, 37 gegenüber dem nicht-progressiven Dämpfer getauscht, d.h. die Tellerfeder 35 wirkt als Zug-Tellerfeder und die Tellerfeder 37 wirkt als Druck-Tellerfeder. Die Dämpfungskraft-Geschwindigkeits-Kennlinie ist bei geringer Geschwindigkeit durch die wirksame Strömungsquerschnittsfläche der Durchströmkanäle gegeben.

Im Folgenden wird ausgehend von Fig. 1 die Funktion des progressiven Dämpfers 1 bei einer Bewegung des Kolbens 13 in Einschub-Richtung 42 beschrieben, wobei die Einschub-Geschwindigkeit im Vergleich zu der oben beschriebenen Bewegung des Kolbens 13 wesentlich höher ist. Bei einer Bewegung des Kolbens 13 wird durch das in dem zweiten Teil-Arbeitsraum 16 befindliche Dämpfungsfluid 11 eine Kraft auf die Druck-Tellerfeder 37 ausgeübt. Mit zunehmender Kraft wird die Druck-Tellerfeder 37 zunehmend elastisch verformt und gegen die zugehörigen Anlageflächen der Durchströmkanäle gepresst, wobei die wirksame Strömungsquerschnittsfläche zunehmend verringert wird. Bei einer ausreichenden Kraft liegt die Druck-Tellerfeder 37 vollständig gegen die Anlageflächen an, sodass die Durchströmkanäle vollständig verschlossen sind. Das Dämpfungsfluid 11 kann in diesem Fall lediglich durch die Durchströmkanäle von dem zweiten Teil-Arbeitsraum 16 in den ersten Teil-Arbeitsraum 15 strömen. Dadurch wird die Zug-Tellerfeder 35 von den zugehörigen Anlageflächen weggedrückt, sodass der genannte Fluidstrom von dem zweiten Teil-Arbeitsraum 16 in den ersten Teil-Arbeitsraum 15 ermöglicht ist.

Das durch die Kolbenstange 6 verdrängte Volumen des Dämpfungsfluids 11 strömt über den Drosselkanal 46 und den Verteiler-Kanal 48 in den Ausgleichsraum 26. Dadurch, dass der Strömungsquerschnitt des Drosselkanals 46 gegenüber dem Ringquerschnitt in dem ersten Teil-Arbeitsraum 15 reduziert ist, wird das Dämpfungsfluid 11 entlang des Drosselkanals 46 gedrosselt. Der Drosselkanal 46 ist also im Wesentlichen unabhängig von den Fertigungstoleranzen der Kolbenstange 6 und einer Führungsbohrung 50, durch die die Kolbenstange 6 in der Führungs- und Dichtungseinheit 5 geführt ist. Weiterhin sind Maßabweichungen bei der Fertigung des Drosselkanals 46 unkritisch für die Dämpfungswirkung des Dämpfers 1, da die Dämpfungsfunktion von dem durch den Drosselkanal 46 strömenden Volumenstrom des Dämpfungsfluids 11 abhängt. Die genannte Dämpfungswirkung wird wesentlich von der Länge l des Drosselkanals 46 beeinflusst, die größer ist als die lichte Weite d des Drosselkanals 46. Insbesondere ermöglicht die Führungs- und Dämpfungseinheit 5, dass ein Durchströmen des Ringspaltes zwischen Kolbenstange 6 und Führungsbohrung 50 die Dämpfungswirkung des Dämpfers 1 nicht beeinträchtigt.

Eine Veränderung der Drosselleistung und damit der Dämpfungswirkung des Dämpfers 1 kann durch eine Veränderung der Länge l des Drosselkanals 46 direkt und unkompliziert erreicht werden, indem beispielsweise die Breite des Führungs-Deckels 28, d.h. dessen Erstreckung entlang der Mittel-Längs-Achse 12, verändert wird.

Es ist auch möglich, ein Durchströmen des Ringspaltes zu tolerieren. In diesem Fall strömt ein geringer Teil des Dämpfungsfluids 11 in die Druckkammer 31. Dazu kann ein nicht dargestellter Ventilring vorgesehen sein, um zu verhindern, dass das Dämpfungsfluid 11 ungedrosselt in die Druckkammer 31 gelangt und dort mit Fluiddruck p_{f} auf das Dichtungs-Element 30 wirkt. Dadurch kann die Lebensdauer des Dichtungselements 30 vergrößert werden. In der Druckkammer 31 kann zudem eine nicht dargestellte Entlüftungs-Öffnung vorgesehen sein, die bei einem Mindest-Entlüftungs-Druck pₑ ein Entlüften der Druckkammer ermöglicht. Der Entlüftungsdruck pₑ ist größer als der Fluiddruck p_{f}.

Bei einer Betätigung der Kolbenstange 6 ausgehend von der Anordnung in Fig. 2 entlang der Auszugrichtung 41 wird das Dämpfungsfluid 11 aus dem ersten Teil-Arbeitsraum 15 durch den Kolben 13 verdrängt und strömt an dem ersten Gehäuse-Ende 4 über den Drosselkanal 46 und den Verteiler-Kanal 48 in den Ausgleichsraum 26. Das bedeutet, dass auch bei einer Betätigung des Dämpfers 1 in der Auszugrichtung 41 das Dämpfungsfluid 11 den Drosselkanal 46 passiert. An dem zweiten Gehäuse-Ende 7 wird das Dämpfungsfluid 11 über das Boden-Ventil 9 des Innen-Gehäuses 2 in den zweiten Teil-Arbeitsraum 16 angesaugt. Zusätzlich ist es möglich, dass durch die Durchgangsöffnungen in der Kolben-Scheibe 36 ein direkter Fluidstrom von dem ersten Teil-Arbeitsraum 15 in den zweiten Teil-Arbeitsraum 16 erfolgt.

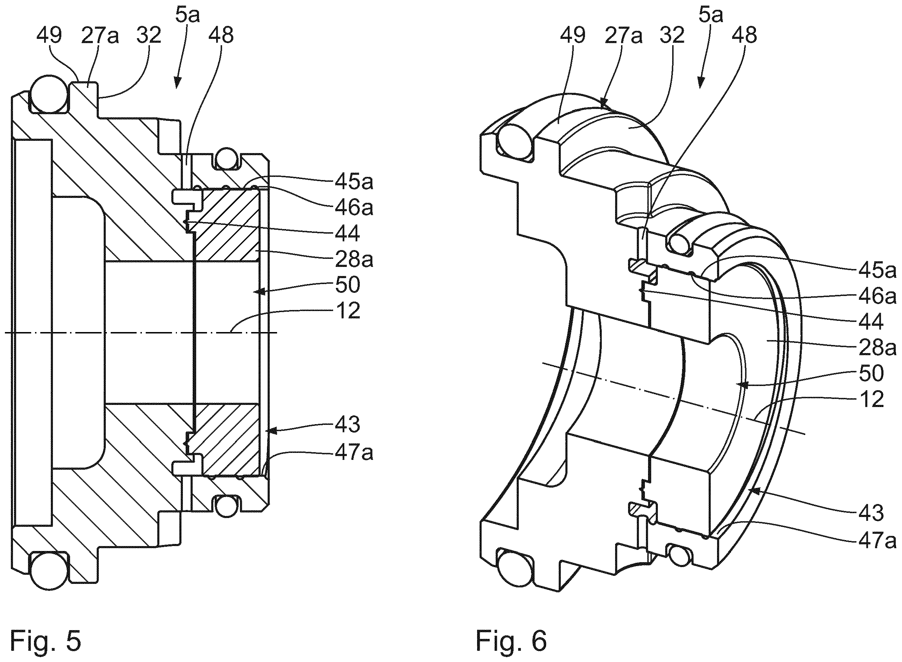

Im Folgenden wird unter Bezugnahme auf die Fig. 5 und 6 ein zweites Ausführungsbeispiel der Erfindung beschrieben. Identische Teile erhalten dieselben Bezugszeichen wie bei dem ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a. Der wesentliche Unterschied gegenüber dem ersten Ausführungsbeispiel besteht darin, dass der Drosselkanal 46a als Innen-Nut an der inneren Zylinder-Mantelfläche 47a des Führungs-Gehäuses 27a ausgebildet ist. Dagegen ist die äußere Zylinder-Mantelfläche 45a des Führungs-Deckels 28a ohne Nut ausgeführt. Bei dem gezeigten Ausführungsbeispiel kann die Länge l des Drosselkanals 46a durch eine Variation der Breite des Führungs-Deckels 28a, d.h. dessen Erstreckung entlang der Mittel-Längs-Achse 12, direkt beeinflusst werden.

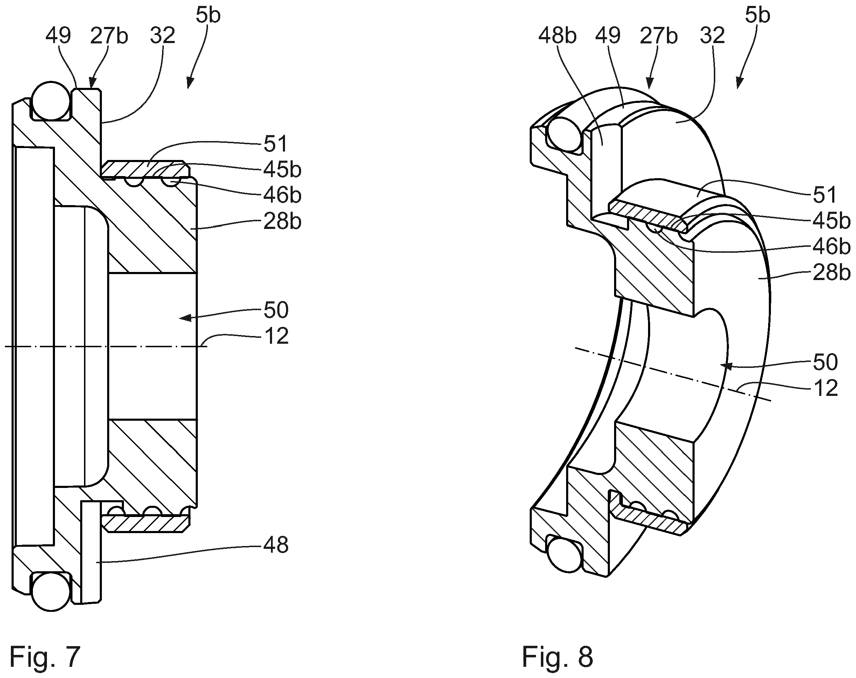

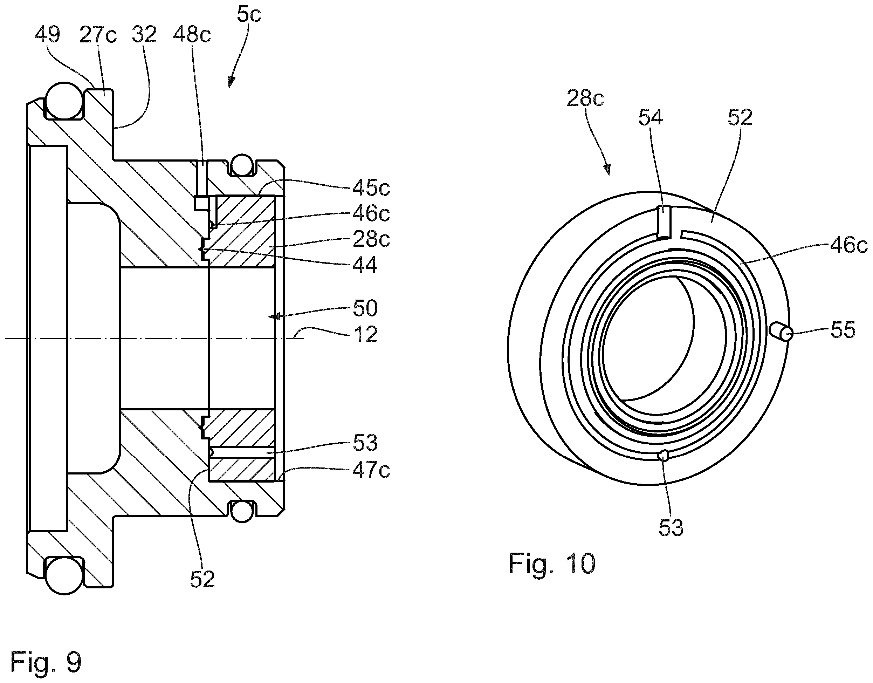

Im Folgenden wird unter Bezugnahme auf die Fig. 7 und 8 ein drittes Ausführungsbeispiel der Erfindung beschrieben. Identische Teile erhalten dieselben Bezugszeichen wie bei den beiden ersten Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten b. Der wesentliche Unterschied gegenüber den beiden ersten Ausführungsbeispielen besteht darin, dass der Drosselkanal 46b als Außen-Nut an einer äußeren Zylinder-Mantelfläche 45b des Führungs-Gehäuses 27b integriert ist. Entsprechend weist der Innen-Gehäuse-Abschnitt des Führungs-Gehäuses 27b keine Ausnehmung für einen Führungs-Deckel auf. Der Führungs-Deckel 28b ist sozusagen einstückig in das Führungs-Gehäuse 27b integriert. Der Drosselkanal 46b ist durch ein Abdeck-Element 51 abgedeckt, das zwischen der äußeren Zylinder-Mantelfläche 45b des Führungs-Gehäuses 27b und einer inneren Mantelfläche des Innen-Gehäuses 2 angeordnet ist. Durch Variation einer Breite des Abdeck-Elements 51 kann die wirksame Länge des Drosselkanals 46 und damit die Dämpfungswirkung des Dämpfers 1 verändert werden. Es ist möglich, den Führungs-Deckel 28b als separates Bauteil vorzusehen und an dem Führungsgehäuse 27b anzuordnen. Alternativ wäre es auch möglich, dass der Drosselkanal 46b als Innen-Nut an einer inneren Zylinder-Mantelfläche des Abdeck-Elements 51 vorgesehen ist. In diesem Fall wäre die äußere Zylinder-Mantelfläche 45b des Führungs-Gehäuses 27b ohne Außen-Nut, also plan, ausgeführt.
Im Folgenden wird unter Bezugnahme auf die Fig. 9 und 10 ein viertes nicht erfindungsgemäßes Ausführungsbeispiel beschrieben. Identische Teile erhalten dieselben Bezugszeichen wie bei den ersten drei Ausführungsbeispielen, auf deren Beschreibung hiermit verwiesen wird. Konstruktiv unterschiedliche, jedoch funktionell gleichartige Teile erhalten dieselben Bezugszeichen mit einem nachgestellten c. Der wesentliche Unterschied gegenüber den ersten Ausführungsbeispielen besteht darin, dass der Drosselkanal 46c spiralförmig an einer dem Führungs-Gehäuse 27c zugewandten Stirnfläche 52 des Führungs-Deckels 28c ausgeführt ist. Entsprechend weist der Führungs-Deckel 28c eine Zutrittsöffnung 53 auf, über die das Dämpfungsfluid 11 von dem Arbeitsraum 10 in den Drosselkanal 46c gelangen kann. Die Zutrittsöffnung 53 verbindet die beiden einander gegenüberliegenden Stirnflächen 52 des Führungs-Deckels 28c. Entsprechend weist der Führungs-Deckel 28c eine bezüglich der Mittel-Längs-Achse 12 radial nach außen gerichtete Austrittsöffnung 54 auf, die den Drosselkanal 46c mit dem Verteiler-Kanal 48 in dem Führungs-Gehäuse 27c verbindet. Die ZylinderMantelflächen 45c, 47c des Führungs-Gehäuses 27c bzw. des Führungs-Deckels 28c weisen keine Nuten auf.

Weiterhin ist an der Stirnfläche 52 des Führungs-Deckels 28c, die dem Führungs-Gehäuse 27c zugewandt ist, ein Positionier-Stift 55 vorgesehen. Der Positionier-Stift 55 ist in einer dafür vorgesehen Ausnehmung in dem Führungs-Gehäuse 27c anordenbar. Dadurch ist der Führungs-Deckel 28c bezüglich einer Drehposition um die Mittel-Längs-Achse 12 an dem Führungs-Gehäuse 27c festgelegt. Entsprechend ist die Länge l des spiralförmigen Drosselkanals 46c festgelegt. Somit ist es möglich, die Dämpfungswirkung durch Veränderung der Länge l des Drosselkanals 46c einzustellen.

Der spiralförmige Drosselkanals 46c kann auch an der Stirnfläche des Führungskörpers 27c angeordnet sein. Entsprechend weist dann der Führungs-deckel 28c eine plane Stirnfläche auf.

## Patentansprüche

1. Dämpfer zur Dämpfung einer Bewegung entlang einer Mittel-Längs-Achse (12), insbesondere zur Dämpfung eines Sitzes in einem Fahrzeug, umfassend
a. ein sich entlang der Mittel-Längs-Achse (12) erstreckendes Außen-Gehäuse (3),
b. eine das Außen-Gehäuse (3) an einem ersten Gehäuse-Ende (19) abschließende Führungs- und Dichtungseinheit (5; 5a; 5b; 5c),
c. eine durch die Führungs- und Dichtungseinheit (5; 5a; 5b; 5c) abgedichtet aus dem ersten Gehäuse-Ende (19) herausgeführte Kolbenstange (6),
d. ein in dem Außen-Gehäuse (3) angeordnetes Innen-Gehäuse (2), das einen Arbeitsraum (10) umgibt,
e. ein in dem Arbeitsraum (10) befindliches Dämpfungsfluid (11),
f. ein dem ersten Gehäuse-Ende (19) gegenüberliegendes zweites Gehäuse-Ende (22),
g. einen in dem Innen-Gehäuse (2) entlang der Mittel-Längs-Achse (12) geführter und an der Kolbenstange (6) befestigten Kolben (13),
i. der den Arbeitsraum (10) in einen dem ersten Gehäuse-Ende (19) zugewandten ersten Teil-Arbeitsraum (15) und einen dem zweiten Gehäuse-Ende (22) zugewandten zweiten Teil-Arbeitsraum (16) unterteilt, und
ii. der mindestens einen Durchström-Kanal zum Verbinden der Teil-Arbeitsräume (15, 16) aufweist,
h. einen zwischen dem Innen-Gehäuse (2) und dem Außen-Gehäuse (3) angeordneten Ausgleichsraum (26) und
i. einen in die Führungs- und Dichtungseinheit (5; 5a; 5b; 5c) integrierten Drosselkanal (46; 46a; 46b; 46c) für eine FluidDrosselverbindung zwischen dem Arbeitsraum (10) und dem Ausgleichsraum (26), wobei der Drosselkanal (46; 46a; 46b; 46c)
i. eine Länge (l) und
ii. eine lichte Weite (d) aufweisende Querschnittsfläche umfasst,
iii. zumindest abschnittsweise quer zur Mittel-Längs-Achse (12) orientiert ist und schraubenlinienförmig um die Mittel-Längs-Achse (12) ausgeführt ist,
**dadurch gekennzeichnet, dass** der Drosselkanal (46; 46a; 46b; 46c) einen Öffnungswinkel von größer 360° hat.

2. Dämpfer nach Anspruch 1, **dadurch gekennzeichnet, dass** gilt d < l, insbesondere d/l < 0,1, insbesondere d/l < 0,05, insbesondere d/l < 0,01 und insbesondere d/l < 0,005.

3. Dämpfer nach einem der vorstehenden Ansprüche, **dadurch gekennzeichnet, dass** die Länge (l) des Drosselkanals (46; 46a; 46b; 46c) veränderlich einstellbar ist.

4. Dämpfer nach einem der vorstehenden Ansprüche, **dadurch gekennzeichnet, dass** die Führungs- und Dichtungseinheit (5; 5a; 5b; 5c) ein Führungs-Gehäuse (27; 27a; 27b; 27c) und einen Führungs-Deckel (28; 28a; 28b; 28c) umfasst.

5. Dämpfer nach Anspruch 4, **dadurch gekennzeichnet, dass** der Drosselkanal (46; 46a; 46b; 46c) in das Führungs-Gehäuse (27; 27a; 27b; 27c) und/oder den Führungs-Deckel (28; 28a; 28b; 28c) integriert ist.

6. Dämpfer nach Anspruch 4 oder 5, **dadurch gekennzeichnet, dass** der Drosselkanal (46a; 46b) als Nut an einer Zylinder-Mantelfläche (47a; 47b) des Führungs-Gehäuses (27a; 27b) ausgebildet ist.

7. Dämpfer nach einem der Ansprüche 4 bis 6, **dadurch gekennzeichnet, dass** der Drosselkanal (46; 46c) als Nut an einer äußeren Zylinder-Mantelfläche (45) und/oder einer, insbesondere dem Führungs-Gehäuse (27; 27c) zugewandten, Stirnfläche (52) des Führungs-Deckels (28; 28c) ausgebildet ist.

8. Dämpfer nach einem der Ansprüche 4 bis 7, **dadurch gekennzeichnet, dass** die Führungs- und Dichtungseinheit (5b) ein Abdeck-Element (51) umfasst.

9. Dämpfer nach Anspruch 8, **dadurch gekennzeichnet, dass** das ringförmige Abdeck-Element (51) zwischen einer äußeren Mantelfläche (45b) des Führungs-Gehäuses (27b) und einer inneren Mantelfläche des Innen-Gehäuses (2) angeordnet ist.

10. Dämpfer nach einem der vorstehenden Ansprüche, **dadurch gekennzeichnet, dass** mindestens ein Rückschlagventil in dem Drosselkanal (46; 46a; 46b; 46c) derart angeordnet ist, dass ein Fluidstrom entlang des Drosselkanals (46; 46a; 46b; 46c) von dem Arbeitsraum (10) in den Ausgleichsraum (26) ermöglicht und insbesondere von dem Ausgleichsraum (10) in den Arbeitsraum (26) verhindert ist.

11. Dämpfer nach einem der vorstehenden Ansprüche, **dadurch gekennzeichnet, dass** die Führungs- und Dichtungseinheit (5; 5a; 5b; 5c) ein Dichtungs-Element (30) und einen Ventilring aufweist.

12. Dämpfer nach Anspruch 11, **dadurch gekennzeichnet, dass** die Führungs- und Dichtungseinheit (5; 5a; 5b; 5c) eine Entlüftungs-Öffnung zum Entlüften einer von der Führungs- und Dichtungseinheit (5; 5a; 5b; 5c), dem Dichtungs-Element (30), dem Ventilring und der Kolbenstange (6) begrenzten Druckkammer (31) aufweist.

13. Dämpfer nach Anspruch 12, **gekennzeichnet durch** einen Mindest-Entlüftungsdruck (pₑ) zum Entlüften der Druckkammer (31) über die Entlüftungs-Öffnung, wobei der Entlüftungsdruck (pₑ) größer ist als ein Fluiddruck (p_{f}) entlang des Drosselkanals (46; 46a; 46b; 46c).

14. Dämpfer nach einem der vorstehenden Ansprüche, **dadurch gekennzeichnet, dass** der Arbeitsraum (10) an dem zweiten Gehäuse-Ende (22) mittels eines Boden-Ventils (9) mit dem Ausgleichsraum (26) verbunden ist, wobei das Boden-Ventil (9) insbesondere eine Fluidströmung von dem Ausgleichsraum (26) in den Arbeitsraum (10) und insbesondere in den zweiten Teil-Arbeitsraum (16) ermöglicht.

## Claims

1. Damper for damping a movement along a middle-longitudinal-axis (12), in particular for damping a seat in a vehicle, comprising
a. an outer housing (3) extending along the middle-longitudinal-axis (12),
b. a guiding and sealing unit (5; 5a; 5b; 5c) closing the outer housing (3) at a first housing end (19),
c. a piston rod (6) guided out of the first housing end (19) sealed by the guiding and sealing unit (5; 5a; 5b; 5c),
d. an inner housing (2) arranged in the outer housing (3), which surrounds a working chamber (10),
e. a damping fluid (11) located in the working chamber (10),
f. a second housing end (22) opposite the first housing end (19),
g. a piston (13) guided in the inner housing (2) along the middle-longitudinal-axis (12) and secured to the piston rod (6),
i. wherein the piston (13) divides the working chamber (10) into a first part-working chamber (15) facing the first housing end (19) and a second part-working chamber (16) facing the second housing end (22), and
ii. wherein the piston (13) comprises at least one throughflow channel for connecting the part-working chambers (15, 16),
h. an equalizing chamber (26) arranged between the inner housing (2) and the outer housing (3) and
i. a throttling channel (46; 46a; 46b; 46c) integrated into the guiding and sealing unit (5; 5a; 5b; 5c) for a fluid throttling connection between the working chamber (10) and the equalizing chamber (26), wherein the throttling channel (46; 46a; 46b; 46c) has
i. a length (1) and
ii. a cross-sectional area comprising an internal width (d),
iii. is oriented at least in sections at right angles to the middle-longitudinal-axis (12) and is configured to be helical about the middle-longitudinal axis (12),
**characterized in that** the throttling channel (46; 46a; 46b; 46c) has an opening angle of greater than 360°.

2. Damper according to claim 1, **characterized in that** d < 1, in particular d/l < 0.1, in particular d/l < 0.05, in particular d/l < 0.01 and in particular d/l < 0.005.

3. Damper according to any one of the preceding claims, **characterized in that** the length (1) of the throttling channel (46; 46a; 46b; 46c) can be adjusted variably.

4. Damper according to any one of the preceding claims, **characterized in that** the guiding and sealing unit (5; 5a; 5b; 5c) comprises a guiding housing (27; 27a; 27b; 27c) and a guiding cover (28; 28a; 28b; 28c).

5. Damper according to claim 4, **characterized in that** the throttling channel (46; 46a; 46b; 46c) is integrated into the guiding housing (27; 27a; 27b; 27c) and/or the guiding cover (28; 28a; 28b; 28c).

6. Damper according to claim 4 or 5, **characterized in that** the throttling channel (46a; 46b) is configured as a groove on a cylinder casing surface (47a; 47b) of the guiding housing (27a; 27b).

7. Damper according to any one of claims 4 to 6, **characterized in that** the throttling channel (46; 46c) is configured as a groove on an outer cylinder-casing surface (45) and/or an end face surface (52) of the guiding cover (28; 28c) facing in particular the guiding housing (27; 27c).

8. Damper according to one of claims 4 to 7, **characterized in that** the guiding and sealing unit (5b) comprises a cover element (51).

9. Damper according to claim 8, **characterized in that** the annular cover element (51) is arranged between an outer casing surface (45b) of the guiding housing (27b) and an inner casing surface of the inner housing (2).

10. Damper according to one of the preceding claims, **characterized in that** at least one check valve in the throttling channel (46; 46a; 46b; 46c) is arranged such that the flow of fluid is allowed along the throttling channel (46; 46a; 46b; 46c) from the working chamber (10) into the equalizing chamber (26) and is prevented in particular from the equalizing chamber (10) into the working chamber (26).

11. Damper according to any one of the preceding claims, **characterized in that** the guiding and sealing unit (5; 5a; 5b; 5c) comprises a sealing element (30) and a valve ring.

12. Damper according to claim 11, **characterized in that** the guiding and sealing unit (5; 5a; 5b; 5c) comprises a venting opening for venting a pressure chamber (31) delimited by the guiding and sealing unit (5; 5a; 5b; 5c), the sealing element (30), the valve ring and the piston rod (6).

13. Damper according to claim 12, **characterized by** a minimum venting pressure (pₑ) for venting the pressure chamber (31) via the venting opening, wherein the venting pressure (pₑ) is greater than a fluid pressure (p_{f}) along the throttling channel (46; 46a; 46b; 46c).

14. Damper according to any one of the preceding claims, **characterized in that** the working chamber (10) is connected at the second housing end (22) by means of a bottom valve (9) to the equalizing chamber (26), wherein the bottom valve (9) enables in particular a flow of fluid from the equalizing chamber (26) into the working chamber (10) and in particular into the second part-working chamber (16).

## Revendications

1. Amortisseur destiné à amortir un déplacement le long d'un axe longitudinal central (12), en particulier à amortir un siège dans un véhicule, comprenant
a. un boîtier extérieur (3) s'étendant le long de l'axe longitudinal central (12),
b. un élément de guidage et d'étanchéité (5 ; 5a ; 5b ; 5c) fermant le boîtier extérieur (3) au niveau d'une première extrémité (19) du boîtier,
c. une tige de piston (6) sortant de la première extrémité (19) du boîtier en traversant de manière étanche l'élément de guidage et d'étanchéité (5 ; 5a ; 5b ; 5c),
d. un boîtier intérieur (2) disposé dans le boîtier extérieur (3), qui circonscrit une zone de travail (10),
e. un fluide amortisseur (11) se trouvant dans la zone de travail (10),
f. une deuxième extrémité (22) de boîtier, située à l'opposé de la première extrémité (19) de boîtier,
g. un piston (13) guidé dans le boîtier intérieur (2) le long de l'axe longitudinal central (12) et fixé à la tige de piston (6), et
i. qui partage la zone de travail (10) en une première zone de travail partielle (15) tournée vers la première extrémité (19) de boîtier et en une deuxième zone de travail partielle (16) tournée vers la deuxième extrémité (22) de boîtier,
ii. qui comporte au moins un canal d'écoulement servant à relier les espaces de travail partiels (15, 16),
h. une zone de compensation (26) disposée entre le boîtier intérieur (2) et le boîtier extérieur (3) et
i. un canal d'étranglement (46 ; 46a ; 46b ; 46c) intégré dans l'élément de guidage et d'étanchéité (5 ; 5a ; 5b ; 5c) pour un raccordement fluidique avec étranglement entre la zone de travail (10) et la zone de compensation (26), le canal d'étranglement (46 ; 46a ; 46b ; 46c)
i. comprenant une longueur (I) et
ii. une surface en coupe transversale comportant un diamètre intérieur (d),
iii. étant orienté au moins par sections transversalement à l'axe longitudinal central (12) et étant conçu sous forme hélicoïdale autour de l'axe longitudinal central (12),
**caractérisé en ce que** le canal d'étranglement (46 ; 46a ; 46b ; 46c) possède un angle d'ouverture supérieur à 360°.

2. Amortisseur selon la revendication 1, **caractérisé en ce que** l'on a d < 1, en particulier d/I < 0,1, en particulier d/I < 0,05, en particulier d/I < 0,01, et en particulier d/I < 0,005.

3. Amortisseur selon l'une des revendications précédentes, **caractérisé en ce que** la longueur (I) du canal d'étranglement (46 ; 46a ; 46b ; 46c) est réglable de manière variable.

4. Amortisseur selon l'une des revendications précédentes, **caractérisé en ce que** l'élément de guidage et d'étanchéité (5 ; 5a ; 5b ; 5c) comprend un boîtier de guidage (27 ; 27a ; 27b ; 27c) et un couvercle de guidage (28 ; 28a ; 28b ; 28c).

5. Amortisseur selon la revendication 4, **caractérisé en ce que** le canal d'étranglement (46 ; 46a ; 46b ; 46c) est intégré dans le boîtier de guidage (27 ; 27a ; 27b ; 27c) et/ou le couvercle de guidage (28 ; 28a ; 28b ; 28c).

6. Amortisseur selon la revendication 4 ou 5, **caractérisé en ce que** le canal d'étranglement (46a ; 46b) est réalisé sous forme de rainure sur une surface enveloppante cylindrique (47a ; 47b) du boîtier de guidage (27a ; 27b).

7. Amortisseur selon l'une des revendications 4 à 6, **caractérisé en ce que** le canal d'étranglement (46 ; 46c) est réalisé sous forme de rainure sur une surface enveloppante cylindrique extérieure (45) et/ou une face frontale (52) du couvercle de guidage (28 ; 28c), tournée en particulier vers le boîtier de guidage (27 ; 27c).

8. Amortisseur selon l'une des revendications 4 à 7, **caractérisé en ce que** l'élément de guidage et d'étanchéité (5b) comprend un élément de recouvrement (51).

9. Amortisseur selon la revendication 8, **caractérisé en ce que** l'élément de recouvrement annulaire (51) est disposé entre une surface enveloppante extérieure (45b) du boîtier de guidage (27b) et une surface enveloppante intérieure du boîtier intérieur (2).

10. Amortisseur selon l'une des revendications précédentes, **caractérisé en ce qu'**au moins un clapet anti-retour est disposé dans le canal d'étranglement (46 ; 46a ; 46b ; 46c) de manière à permettre un écoulement de fluide le long du canal d'étranglement (46 ; 46a ; 46b ; 46c) de la zone de travail (10) à la zone de compensation (26) et à le bloquer en particulier de la zone de compensation (10) à la zone de travail (26).

11. Amortisseur selon l'une des revendications précédentes, **caractérisé en ce que** l'élément de guidage et d'étanchéité (5 ; 5a ; 5b ; 5c) comporte un élément d'étanchéité (30) et une bague de soupape.

12. Amortisseur selon la revendication 11, **caractérisé en ce que** l'élément de guidage et d'étanchéité (5 ; 5a ; 5b ; 5c) comporte une ouverture d'aération pour aérer une chambre sous pression (31) délimitée par l'élément de guidage et d'étanchéité (5 ; 5a ; 5b ; 5c), l'élément d'étanchéité (30), la bague de soupape et la tige de piston (6).

13. Amortisseur selon la revendication 12, **caractérisé par** une pression minimale d'aération (pₑ) pour aérer la chambre sous pression (31) au moyen de l'ouverture d'aération, la pression d'aération (pₑ) étant supérieure à une pression de fluide (p_{f}) le long du canal d'étranglement (46 ; 46a ; 46b ; 46c).

14. Amortisseur selon l'une des revendications précédentes, **caractérisé en ce que** la zone de travail (10) au niveau de la deuxième extrémité (22) de boîtier est reliée à la zone de compensation (26) au moyen d'une soupape de fond (9), la soupape de fond (9) permettant en particulier un écoulement fluidique de la zone de compensation (26) à la zone de travail (10) et en particulier à la deuxième zone de travail partielle (16).
